# EUROPEAN PATENT APPLICATION

(11) **EP 4 653 964 A1**
(43) Date of publication of application: **26.11.2025**
(21) Application number: 24177423.1
(22) Date of filing: 22.05.2024
(51) Int. Cl.: G05B 19/418, G05B 17/02

(54) **A METHOD FOR CONTROLLING A SUB-SYSTEM OF AN INDUSTRIAL PLANT**

(71) Applicant: ABB SCHWEIZ AG, 5400 Baden (CH)
(72) Inventor: MANCA, Gianluca, 80935 München (DE); MACZEY, Sylvia, 69493 Hirschberg (DE); RODRIGUEZ, Pablo, 69488 Birkenau (DE); TAN, Ruomu, 68163 Mannheim (DE); RASTEGARPOUR, Soroush, 72359 Västerås (SE)
(74) Representative: Maiwald GmbH

(57) **Abstract**

The invention relates to the field of industrial plants, particularly to a method for controlling a sub-system (200, 300, 400) of an industrial plant (100). The method comprises the steps of:
retrieving, by the orchestrator (120), information about the sub-system (200, 300, 400); training the orchestrator (120), based on the retrieved information;
receiving, by the orchestrator (120), a high-level production target (180) for the industrial plant (100);
deriving, by the orchestrator (120), instructions regarding a production target for the sub-system (200, 300, 400);
transmitting, by the orchestrator (120), the instructions to a control agent (220, 320, 420) of the sub-system (200, 300, 400); and
starting, by the control agent, a production process, the production process comprising the steps of:
reporting, by the control agent, a current state of the components (250, 260, 350, 360, 450, 460), an achievement degree and the alarm-logs (230, 330, 430) of the sub-system (200, 300, 400) to the orchestrator (120); and
transmitting, by the orchestrator (120), updated instructions to the control agent (220, 320, 420) of the sub-system (200, 300, 400).

## Description

### Field of the Invention

The invention relates to the field of industrial plants, particularly to a method and a system for controlling the industrial plant, particularly a sub-system of the industrial plant. The invention further relates to an orchestrator and to a control agent.

### Background

Controlling an industrial plant is a highly complicated and error-prone task. Since the costs for running the industrial plant may be high, and costs for faults of and/or inside the industrial plant may be even higher, a high degree of automation is desired. However, there is still a desire both for a higher degree of automation and for a method that considers both high-level aspects of the industrial plant and also aspects of controlling the components of the industrial plant. The components of the industrial plant are in many cases structured in sub-systems of the plant.

### Description

It is an objective of the disclosure to provide an improved method for controlling a sub-system of an industrial plant. This objective is achieved by the subject-matter of the independent claims. Further embodiments are evident from the dependent claims and the following description.

One aspect relates to a method for controlling a sub-system of an industrial plant, the sub-system comprising components, the components comprising at least one sensor and at least one actuator, the industrial plant further comprising an orchestrator, the method comprising the steps of:
retrieving, by the orchestrator, information about the sub-system, the information comprising a description of the sub-system, a time-series data of the states of the components and alarm-logs of the sub-system;
training the orchestrator, based on the retrieved information;
receiving, by the orchestrator, a high-level production target for the industrial plant;
deriving, by the orchestrator, instructions regarding a production target for the sub-system, the instructions being based on the high-level production target and the information about the sub-system;
transmitting, by the orchestrator, the instructions to a control agent of the sub-system; and
starting, by the control agent, a production process, the production process comprising the steps of:
   reporting, by the control agent, a current state of the components, an achievement degree and the alarm-logs of the sub-system to the orchestrator; and
   transmitting, by the orchestrator, updated instructions to the control agent of the sub-system.

The industrial plant may be configured for producing and/or for manufacturing substances, for instance materials and/or compounds. The industrial plant may comprise one or more sub-systems. For simplicity reasons, most considerations of this document seem to relate to only one sub-system; however, applying these considerations to a plurality of sub-systems is intended in most cases and will not be a complicated task. Each sub-system may comprise components, such as sensors and actuators. Examples for sensors may comprise inductive, capacitive, resistive, and/or optical means, configured, e.g., for sensing pressure, flow, temperature, distance, and/or variations of these measures, e.g. speed, acceleration, etc. Examples for actuators may comprise pumps, compressors, vessels or pressure vessels, tanks, heat exchangers, furnaces, fans, cooling towers, valves, etc.

This invention addresses the issue of a highly autonomous operation of the industrial plant; this may comprise an issue mitigation in the industrial process plant. The basic idea is a utilization of data-driven models, specifically artificial intelligence (Al) models. The technical solution comprises a framework that integrates various control layers and agents. The technical solution may further comprise databases and additional tools. The coordination and/or further tasks are performed by a so-called orchestrator. The orchestrator may be configured for performing more tasks than described herein.

For training the orchestrator, particularly for an initial training, information about the sub-system is used. The information about the sub-system may comprise a description of the sub-system, particularly a formal and/or computer-readable description. Said description may comprise a topology description of the sub-system, particularly an attributed topology description. In case of a plurality of sub-systems, the topology description of the sub-systems may be combined by the orchestrator. Said description may be based, for example, on a process flow diagram, PFD, on a so-called piping and instrumentation diagram, P&ID diagram, and/or others. The time-series data of the states of the components may comprise, as an example and depending on the type of the component, a pressure data, a flow data, a temperature data, or distance data from a sensor, and/or current data, voltage data, etc. from an actuator. The data may be measured and/or stored on a regular basis, e.g. every second, minute, hour, etc., and/or event-based, e.g. when an alarm is emitted. The data may comprise additionally and/or derived data, e.g. alarm-logs, manual interventions of an operator, etc. At least some of the data may be related to the sub-system. In at least some cases, also data that can only be determined on plant level may be considered as well. In cases when data are not directly available from a component, data may be taken from a model and/or from a database with data from the same type of component. Based on the retrieved information, the orchestrator may be trained. Further training data may be retrieved during an operational run of the orchestrator. The training data and/or the training process may be "limited" in a way that, during normal operation of the orchestrator, the underlying model can only be changed or altering slightly ("fine-tuning"). For some scenarios, the underlying model may not be changed at all, but only a so-called "in-context learning" is done, which only changes a "context file". Said context file may comprise a current and/or past context of the plant and/or its sub-systems. Examples may comprise, e.g., alarm-logs and/or past decisions of the orchestrator. Changing or "feeding" the context file may be considered as kind of alternative to altering the underlying model's internal structure.

Besides said information data, the orchestrator receives a high-level production target for the industrial plant. The high-level production target may come in a formal way, e.g. from a file or another type of command. In at least some embodiments, the high-level production target may come in the form of a natural language description, which may be similar to instructions traditionally provided to process operators. For doing this, a so-called context tool may offer a natural language description of the process and target-related information, utilizing so-called "retrieval augmented generation", which parses unstructured data to provide relevant insights and/or to deliver a formal high-level production target.

Based on the high-level production target and the information about the sub-system, if applicable: of each of the sub-systems, the orchestrator derives for the sub-system (or for each of the sub-systems) instructions regarding a production target for the sub-system. For instance, if 10 tons of material XYZ are to be produced, the orchestrator derives for the sub-system A an instruction "produce 4 tons of material XYZ" and for the sub-system B an instruction "produce 6 tons of material XYZ". Realistic instructions may comprise more detailed instruction aspects and/or further constraints, e.g. "do the producing within 5 minutes", "do not heat vessel V over 180 °C", "watch for an NOx emission to be lower than VALUE", etc. The instructions are, then, transmitted, by the orchestrator, to a control agent of the sub-system. A selection of the sub-system of choice may be done before, e.g. based on predefined criteria.

Having received the instructions, the control agent starts a production process, i.e. the production process as requested by the instructions. The production process comprises the steps of: Reporting, by the control agent, a current state of the components, and an achievement degree and the alarm-logs of the sub-system to the orchestrator; and transmitting, by the orchestrator, updated instructions to the control agent of the sub-system. The reporting may be done continuously or on demand, e.g. triggered by an alarm. The orchestrator can, then, monitor the current state of the components or, in other words, the effects of the actions, which have been initiated by the control agent, based on the instructions. Based on - possibly as a reaction on - the reported current states, the orchestrator may make necessary adjustments to stay on course towards the high-level target. Said adjustments may be transmitted as updated instructions to the control agent. By this, the orchestrator considers both the high-level production target and the situation or status of the components, which are involved in the production, on sub-system level.

In other words, the process may begin with the orchestrator receiving a high-level production target, which may come in the form of a formal command and/or of a natural language description similar to instructions traditionally provided to process operators. The target can originate from a human expert, like the operations manager, or an automated scheduling system, such as an ERP system. Additionally, the orchestrator is given descriptions of available APIs (Application Programming Interfaces), which may support a structured natural language, e.g., a Docstring, outlining the expected inputs and outputs. These APIs may define the orchestrator's interface with various tools and lower-level managers. To achieve a given target, the orchestrator may follow a predefined template of decision-making steps:
- Understanding the Process and Target: The orchestrator interprets the high-level target and familiarizes itself with the process and plant.
- Analyzing the Current State: It assesses the current state of relevant process sections using available data.
- Selecting Lower-level Managers, e.g. a control agent for each sub-system: The orchestrator may identify which lower-level managers should receive instructions based on the analysis.
- Target and Constraints Communication: The selected managers are provided with specific targets and constraints to guide their actions.
- Outcome Monitoring and Adjustment: The orchestrator monitors the effects of these actions and makes necessary adjustments, i.e. sends instructions, to stay on course towards the high-level target. Throughout this sequence, the orchestrator may keep a record of steps taken, using summaries of previous actions as context for subsequent decisions. The instructions may comprise, for example, changes in setpoints, switching to redundant plant sections or equipment, or starting up or shutting down of plant sections. This may include tasks like monitoring the health status of the plant sections' equipment and sub-automation systems (agents), as well as deciding on and performing relevant actions. This may incorporate a "decision making" component that assumes the responsibilities traditionally managed by an operator in plants with lower automation status.

The method may advantageously contribute to provide an improved method for controlling a sub-system of an industrial plant. This framework may further increase a level of autonomy in modern process plants and may reduce the requirement for operator intervention. The framework may contribute to understand the target of production as well as the specification and limitation of the process equipment. The framework may further evaluate health conditions and operating states of the process units or components and may implement strategies for controlling the components to achieve the target of production with respect to the limitations and operating constraints in a highly autonomous way. The framework may use Al-based techniques, such as foundation models, for analysing various types of data available in the process plants, such as process documentation, maintenance logs, alarm and events and time series data, to make decisions about process operation in highly autonomous way, which may require reduced human inputs and operator intervention.

In various embodiments, the orchestrator comprises a foundation model. This may include large language models (LLMs) such as the so-called GPT4. Such LLMs may be "more intelligent", compared to traditional analytical models like ANNs (Artificial Neural Networks), specifically with an increased ability to interpret an "overlying intention", such as the high-level production target for the industrial plant. Moreover, they may be able to make decisions, e.g. here: assigning tasks to the agents, by processing and generating various types of data including natural language and structured text. Using the foundation model may include to use a so-called "context file" (see below).

In various embodiments, the method further comprises the step of: After reporting, by the control agent, a current state of the components, an achievement degree and the alarm-logs of the sub-system to the orchestrator, updating the orchestrator. This step enables a kind of "continuous learning and improvement" of the model used by the orchestrator. The updating of the orchestrator may comprise the altering of the underlying model and/or an update of the "context file".

In various embodiments, the description of the sub-system comprises a topology description of the sub-system. In case of a plurality of sub-systems, the topology description of the sub-systems may be processed jointly by the orchestrator. In some embodiments, the description of the sub-system comprises a process flow diagram, PFD, of a topology of the processing system. In some embodiments, the process flow diagram is a piping and instrumentation diagram, P&ID diagram. These embodiments advantageously provide a common format for describing the process or the plant.

In various embodiments, the state of the component comprises sensed data from the at least one sensor and control data sent to the at least one actuator. The state of the component may further comprise derived and/or combined values from the component(s).

In various embodiments, each of the alarm-logs of the sub-system comprises a list of the components involved in the alarm-log and a related severity level of the alarm-log. Examples of the severity level may comprise: 0 (zero) for "normal operation", "1 .. 9" for "warning levels", "10 .. 19" for "alarm levels", "20 .. 25" for "severe alarms", and/or another severity level system. This may advantageously improve and/or accelerate the decision-making phase of the orchestrator, which leads to transmitting updated instructions to the control agent. This may further contribute to stabilize the system control, e.g. due to lower delay times.

In various embodiments, the receiving of the high-level production target for the industrial plant comprises receiving a natural language description of the production target. This may comprise utilizing so-called "retrieval augmented generation", which parses unstructured data to provide relevant insights. Such unstructured data may comprise, for instance, pdf-files that describe scenarios of the plant. A similarity analysis may be performed to retrieve the most suitable unstructured data for scenario of interest, e.g. for a current scenario.

In various embodiments, the production target for the sub-system comprises a list of constraints. The constraints may comprise operational restrictions, for example a minimum and/or maximum value (or a plurality of minimum and/or maximum values) of certain process variables (e.g. of components), or a list of safe operating ranges of certain equipment, e.g., high and low pressure limit of a pressure vessel. Additionally or as an alternative, the constraints may comprise an availability of material, emission constraints, environmental constraints, e.g. external temperature and humidity, and/or further constraints that are relevant for the production target.

In various embodiments, the reporting is performed continuously or on demand. The frequency of the reporting may depend on the component and/or the sub-system of interest. For instance, values regarding a current voltage may be reported more often than values regarding a current temperature. The reporting on demand may be performed, e.g., on a request by the orchestrator, and/or caused by a severity level of the alarm-log that is higher than a predefined severity level. A "higher" severity level of an alarm or an alarm log may, e.g., be caused by an agent's report, which announces, e.g., "cannot perform", "crucial situation", etc., for a component or for an output (e.g. an emission or a velocity).

An aspect relates to an orchestrator described above and/or below, which comprises a trained foundation model, and which is configured for performing at least a part of the method described above and/or below.

An aspect relates to a control agent of a sub-system of an industrial plant, the control agent configured for receiving instructions from an orchestrator as described above and/or below, for communicating to components of the sub-system and/or for generating an alarm-log.

An aspect relates to a controlling system configured for controlling an industrial plant, the controlling system comprising an orchestrator as described above and/or below and, for each sub-system of the industrial plant, a control agent as described above and/or below.

In various embodiments, the controlling system described above and/or below, further comprises at least one of the following:
- A fault detection tool, configured for determining a fault in a component, based on the current state of the component and the alarm-logs of the sub-system.
- An optimization tool, configured for optimizing the high-level production target for the industrial plant, based, e.g., on marketing constraints.
- Further tools may comprise: A topology tool that gives insight into energy, information and material connections in the plant. A causality tool that uses causal graphs (or similar information) to describe causal relationships between different plant components (both during normal operation and in certain fault scenarios). A time series and alarm log analysis tool to process and condense any raw process states.

It should be noted that two or more embodiments described above and/or below can be combined, as far as technically feasible.

For further clarification/elucidation, the disclosure is described by means of embodiments shown in the figures. These embodiments are to be considered as examples only, but not as limiting.

### Brief Description of the Drawings

The drawings depict:
- **Fig.** 1: schematically a controlling system according to an embodiment configured for controlling an industrial plant;
- Fig. 2: a flow diagram according to an embodiment;
- Fig. 3a - 3d: examples of a concrete scenario according to an embodiment.

### Detailed Description of Embodiments

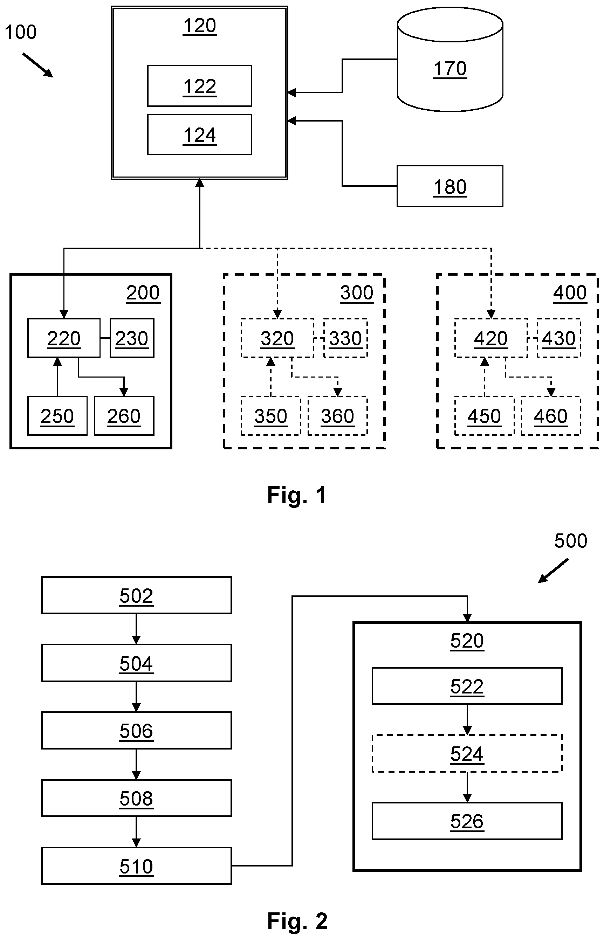

**Fig. 1** schematically shows a controlling system according to an embodiment, the controlling system configured for controlling an industrial plant 100. The industrial plant 100 comprises sub-system 200 and optional sub-systems 300, 400 (depicted with broken lines). Each one of the sub-systems 200, 300, 400 comprises a control agent 220, 320, 420, respectively, and also components 250, 260, 350, 360, 450, 460, the components comprising at least one sensor 250, 350, 450 and at least one actuator 260, 360, 460. Furthermore, each one of the sub-systems 200, 300, 400 comprises an alarm module 230, 330, 430, which is configured for producing an alarm and/or an alarm log. The alarm module 230, 330, 430 producing the alarm (log), e.g., based on predefined sensor values - e.g.: "temperature too high" -, on a manual input, on historic values and/or time-series, and/or further indicators, such as a rate of change of sensor values (temperature increasing to fast), of actuator states (valve opening), a loss of connection to components. The industrial plant 100 further comprises an orchestrator 120, which is configured for communicating with the sub-systems 200, 300, 400, particularly with their control agents 220, 320, 420. The orchestrator 120 comprises an Al-based model 122, for example a foundation model, which may function as a basis for controlling the agents 220, 320, 420. The orchestrator 120 further comprises a computing unit 124, which may be configured, e.g., for performing the communication with the control agents 220, 320, 420. The computing unit 124 may further be configured for accessing a database 170. The database 170 may hold information about the sub-system 200, 300, 400. Said information may comprise a description of the sub-system 200, 300, 400, a time-series data of the states of the components 250, 260, 350, 360, 450, 460, particularly a time-series of historic data of said states, and (particularly also historic) alarm-logs 230, 330, 430 of the sub-system 200, 300, 400. The information of the database 170 may be used to train the Al-based model 122, particularly to produce an initial model 122. The computing unit 124 may further be able to update the model 122, for instance based on reports from and/or by the control agents 220, 320, 420; the reports may reflect a current status of the sub-systems 200, 300, 400. Update may further comprise to feed a context file.

For (and before) starting the production in the sub-systems 200, 300, 400, the orchestrator 120 may receive, a high-level production target 180 for the industrial plant 100. The orchestrator 120 may derive instructions regarding a production target for the sub-system 200, 300, 400, based on the high-level production target 180 and the information about the sub-system 200, 300, 400, which has been retrieved from database 170. The instructions may, then, be sent to the control agents 220, 320, 420, for each of the sub-systems 200, 300, 400.

Fig. 2 shows a flow diagram 500 of a method for controlling a sub-system 200, 300, 400 of an industrial plant 100 (see Fig. 1) according to an embodiment. In a step 502, the orchestrator 120 retrieves information about the sub-system 200, 300, 400. The information comprises a description of the sub-system 200, 300, 400, a time-series data of the states of the components 250, 260, 350, 360, 450, 460 and alarm-logs 230, 330, 430 of the sub-system 200, 300, 400. In a step 504, the orchestrator 120 is trained, based on the retrieved information. In a step 506, the orchestrator 120 receives a high-level production target 180 for the industrial plant 100. In a step 508, the orchestrator 120 derives instructions regarding a production target for the sub-system 200, 300, 400. The instructions are based on the high-level production target 180 and the information about the sub-system 200, 300, 400. In a step 510, the orchestrator 120 transmits the instructions to a control agent 220, 320, 420 of the sub-system 200, 300, 400. Then, the control agent starts a production process 520. The production process comprises a step 522, an optional step 524, and a step 526. In the step 522, the control agent reports a current state of the components 250, 260, 350, 360, 450, 460, an achievement degree and the alarm-logs 230, 330, 430 of the sub-system 200, 300, 400 to the orchestrator 120. In the optional step 524, the orchestrator 120 is updated, based on the current state of the components 250, 260, 350, 360, 450, 460 and the alarm-logs 230, 330, 430 of the sub-systems 200, 300, 400. In the step 526, orchestrator 120 transmits updated instructions to the control agent 220, 320, 420 of the sub-system 200, 300, 400.

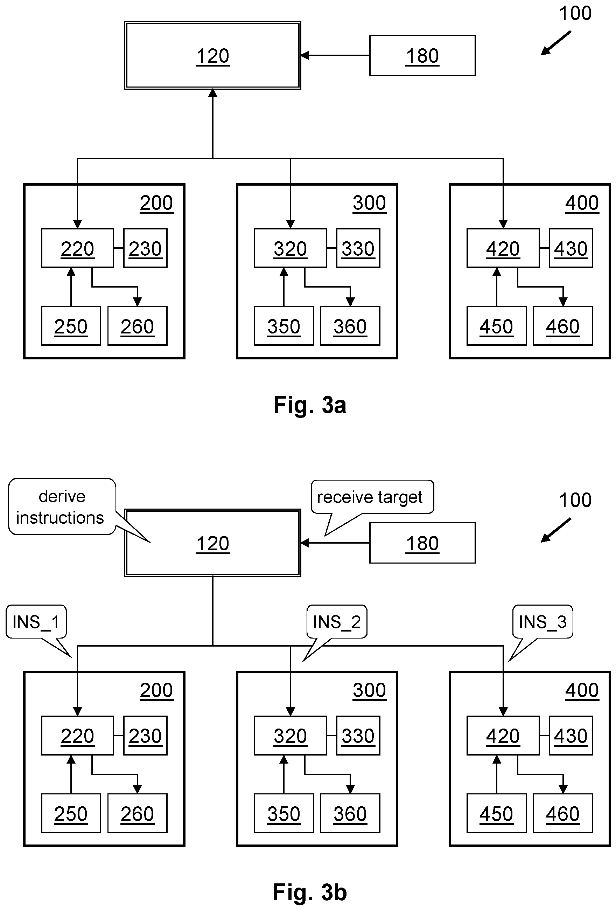

**Figs. 3a** - **3d** illustrate the method by using a more concrete example. **Fig. 3a** depicts the same controlling system as shown in **Fig. 1****,** but with the sub-systems 300 and 400 being non-optional, and without the details of the orchestrator 120 and the database 170. The sub-systems 200 and 300 are burning chambers for coke oven gas, sub-system 400 is an oxygen supply. Same reference signs designate the same or similar entities.

In **Fig. 3b****,** the orchestrator 120 receives a high-level production target 180 for the industrial plant 100. The target 180 may be formulated in the form of a natural language description, which may be similar to instructions traditionally provided to process operators. In the example, the target 180 may be: "I want you to burn 100 kg of coke oven gas in the next 10 minutes. "What you can change is the behaviour of the burning chamber. You also need to watch out for the emission at the end."

The orchestrator 120, then, derives instructions, based on above the target 180 and information from, e.g., database 170. Then the orchestrator 120 transmits instructions INS_1, INS_2, and INS_3 to the respective sub-systems 200, 300, and 400. In this example, the INS_1 to control agent 220 may be: "Target 1: I want you to burn 80 kg of coke oven gas in the next 10 minutes in Chamber 1. Constraints: you need to monitor the temperature and energy consumption." The INS_2 to control agent 320 may be: "Target 2: I want you to burn 20 kg of coke oven gas in the next 10 minutes in Chamber 2. Constraints: you need to monitor the temperature and energy consumption." The INS_3 to control agent 420 may be: "Target 3: I want you to supply enough oxygen to both chambers. Constraints: the cost of oxygen needs to be controlled."

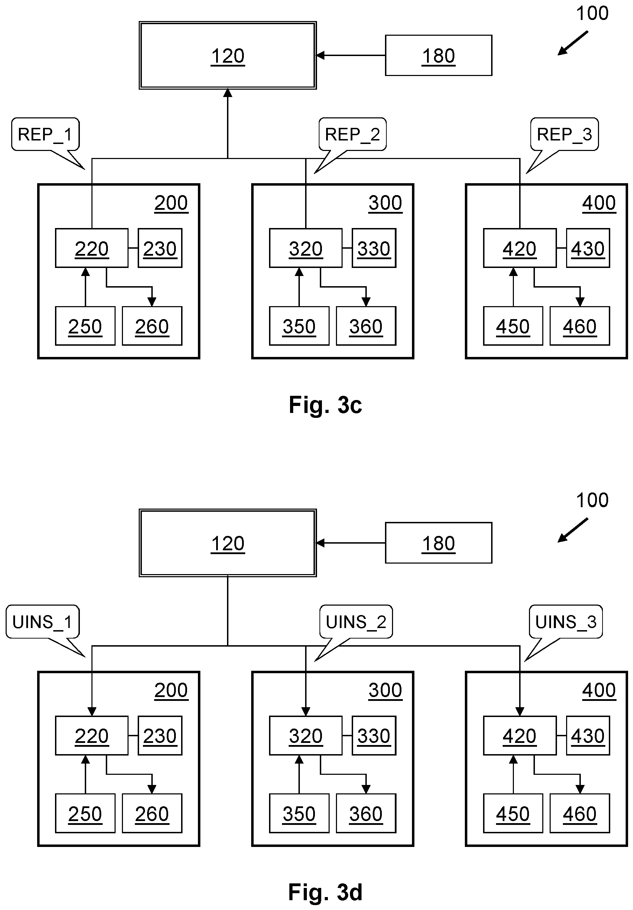

In Fig. 3c, the control agents report a current state of their components 250, 260, 350, 360, 450, 460, an achievement degree and their alarm-logs 230, 330, 430 of each the sub-systems 200, 300, 400 to the orchestrator 120, in reports REP_1, REP_2, and REP_3, respectively. In this example, the REP_1 from control agent 220 may be: "I cannot fulfil the task. I have already burnt 20 kg in 3 minutes. I am reaching the limits; if we continue like this a risk with severity level 2 exists that chamber 1 will be overheated." The REP_2 from control agent 320 may comprise an achievement degree and may be: "I can fulfil the task whilst satisfying the constraints. I have already burnt 5 kg in 3 minutes." The REP_3 from control agent 420 may be: "I can fulfil the task.", possibly also with an achievement degree, i.e. here: how much coal has been burnt.

In **Fig. 3d****,** the orchestrator 120 transmits updated instructions UINS_1, UINS_2, and UINS_3 to the respective sub-systems 200, 300, and 400. In this example, the UINS_1 to control agent 220 may be: "I want you to burn 40 kg of coke oven gas in the next 7 minutes in Chamber 1. Constraints: you need to monitor the temperature and energy consumption." The UINS_2 to control agent 320 may be: "Target 2: I want you to burn 35 kg of coke oven gas in the next 7 minutes in Chamber 2. Constraints: you need to monitor the temperature and energy consumption." The UINS_3 to control agent 420 may be: "Target 3: I want you to supply enough oxygen to both chambers. Constraints: the cost of oxygen needs to be controlled."

The examples clearly particularly show how a concrete (simplified) production process may look like, how it is started and how reporting and updating steps may look like. Furthermore, the advantage of being able to enter and to output natural language instruction and/or statements becomes evident with the above examples.

### List of Reference Symbols

- 100: industrial plant
- 120: orchestrator
- 122: Al-based model, foundation model
- 124: computing unit
- 170: database
- 180: high-level production target
- 200: sub-system
- 220: control agent
- 250: sensor
- 260: actuator
- 300: sub-system
- 320: control agent
- 350: sensor
- 360: actuator
- 400: sub-system
- 420: control agent
- 450: sensor
- 460: actuator
- 230: alarm module
- 500: flow diagram
- 502 - 226: steps

## Claims

1. A method for controlling a sub-system (200, 300, 400) of an industrial plant (100), the sub-system (200, 300, 400) comprising components (250, 260, 350, 360, 450, 460), the components comprising at least one sensor (250, 350, 450) and at least one actuator (260, 360, 460), the industrial plant (100) further comprising an orchestrator (120), the method comprising the steps of:
retrieving, by the orchestrator (120), information about the sub-system (200, 300, 400), the information comprising a description of the sub-system (200, 300, 400), a time-series data of the states of the components (250, 260, 350, 360, 450, 460) and alarm-logs (230, 330, 430) of the sub-system (200, 300, 400);
training the orchestrator (120), based on the retrieved information;
receiving, by the orchestrator (120), a high-level production target (180) for the industrial plant (100);
deriving, by the orchestrator (120), instructions regarding a production target for the sub-system (200, 300, 400), the instructions being based on the high-level production target (180) and the information about the sub-system (200, 300, 400);
transmitting, by the orchestrator (120), the instructions to a control agent (220, 320, 420) of the sub-system (200, 300, 400); and
starting, by the control agent, a production process, the production process comprising the steps of:
reporting, by the control agent, a current state of the components (250, 260, 350, 360, 450, 460), an achievement degree and the alarm-logs (230, 330, 430) of the sub-system (200, 300, 400) to the orchestrator (120); and
transmitting, by the orchestrator (120), updated instructions to the control agent (220, 320, 420) of the sub-system (200, 300, 400).

2. The method of claim 1,
wherein the orchestrator (120) comprises a foundation model (122).

3. The method of claim 1 or 2, further comprising the step of:
after reporting, by the control agent (220, 320, 420), a current state of the components (250, 260, 350, 360, 450, 460), an achievement degree and the alarm-logs (230, 330, 430) of the sub-system (200, 300, 400) to the orchestrator (120), updating the orchestrator (120).

4. The method of any one of the preceding claims,
wherein the description of the sub-system (200, 300, 400) comprises a topology description of the sub-system (200, 300, 400).

5. The method of any one of the preceding claims,
wherein the description of the sub-system (200, 300, 400) comprises a process flow diagram, PFD, of a topology of the processing system.

6. The method of any one of the preceding claims,
wherein the state of the component comprises sensed data from the at least one sensor (250, 350, 450) and control data sent to the at least one actuator (260, 360, 460).

7. The method of any one of the preceding claims,
wherein each of the alarm-logs (230, 330, 430) of the sub-system (200, 300, 400) comprises a list of the components (250, 260, 350, 360, 450, 460) involved in the alarm-log and a related severity level of the alarm-log.

8. The method of any one of the preceding claims,
wherein the receiving of the high-level production target (180) for the industrial plant (100) comprises receiving a natural language description of the production target.

9. The method of any one of the preceding claims,
wherein the production target for the sub-system (200, 300, 400) comprises a list of constraints, the constraints comprising operational restrictions of process variables, of components and/or environmental constraints.

10. The method of any one of the preceding claims,
wherein the reporting is performed continuously or on demand.

11. The method of claim 10,
wherein the reporting on demand is performed on a request by the orchestrator (120), and/or caused by severity level of the alarm-log that is higher than a predefined severity level.

12. An orchestrator (120), comprising a trained foundation model (122), and configured for performing at least a part of the preceding claims.

13. A control agent (220, 320, 420) of a sub-system (200, 300, 400) of an industrial plant (100), the control agent (220, 320, 420) configured for receiving instructions from an orchestrator (120) according to claim 12, for communicating to components (250, 260, 350, 360, 450, 460) of the sub-system and/or for generating an alarm-log.

14. A controlling system configured for controlling an industrial plant (100), the controlling system comprising an orchestrator (120) according to claim 12 and, for each sub-system (200, 300, 400) of the industrial plant (100), a control agent (220, 320, 420) according to claim 13.

15. The controlling system of claim 14, further comprising at least one of:
a fault detection tool, configured for determining a fault in a component (250, 260, 350, 360, 450, 460), based on the current state of the component (250, 260, 350, 360, 450, 460) and the alarm-logs (230, 330, 430) of the sub-system (200, 300, 400);
an optimization tool, configured for optimizing the high-level production target (180) for the industrial plant (100); and/or
a causality tool, configured for describing causal relationships between different plant components.
